# EUROPEAN PATENT APPLICATION

(11) **EP 1 543 938 A1**
(43) Date of publication of application: **22.06.2005**
(21) Application number: 02738727.3
(22) Date of filing: 17.06.2002
(51) Int. Cl.: B29C 47/14, B29C 47/08, B29C 47/04

(54) **FOAM FORMING DIE, AND METHOD OF MANUFACTURING FOAM FORMED PRODUCT USING THE DIE**

(71) Applicant: Fukumura, Mikio, Nara-shi, Nara 631-0013 (JP)
(72) Inventor: Fukumura, Mikio, Nara-shi, Nara 631-0013 (JP)
(74) Representative: Jones, Helen Marjorie Meredith
(86) International application number: PCT/JP2002/005993
(87) International publication number: WO 2003/106138

(57) **Abstract**

The present invention provides a foam forming die comprising an inlet 2, a hollow portion 3, and a channel 5, wherein two rotatable bodies 6a and 6b having an outer periphery substantially in the form of a true circle in cross section are disposed at one end portion of the channel 5, and the end of the channel 5 is narrowed by these two rotatable bodies 6a and 6b to form a discharge portion 9. The two rotatable bodies 6a and 6b are rotated in the molten resin discharge direction to control the flow of the molten resin, whereby heat generated due to shearing can be reduced while the pressure inside the die is maintained at a high pressure. Therefore, the temperature of the molten resin can be readily adjusted, and the flow of the molten resin can be rendered uniform. As a result, even foaming agents with low solubility can be used in a large amount, thereby facilitating foaming of various types of hard-to-foam resins.

## Description

### TECHNICAL FIELD

The present invention relates to foam forming dies for forming thermoplastic resin into a sheet-like foam-formed article, a plate-like foam-formed article with the use of an extruder, and also to a method of producing foam-formed articles using the foam forming die.

### BACKGROUND OF THE INVENTION

Dies such as so-called flat dies or circular dies are used for forming a sheet-like or thick plate-like foam-formed article. Flat dies include fishtail dies, T-dies, etc. Each of these dies has a configuration such that molten resin containing a foaming agent is introduced from an extruder to pass through a channel extending widthwise, to produce a widened molten resin. The obtained widened molten resin is discharged to the outside through a rectangular discharge outlet with a small cross section or a gap so as to be formed into a foamed article substantially immediately when discharged.

In contrast, the circular die is configured such that the introduced molten resin is allowed to pass through a cylindrical channel, to be discharged to the outside from a small gap serving as a cylindrical outlet to be immediately formed into a foamed article. The cylindrical foamed article which is discharged to be foamed, resulting in a softened state, is allowed to slide on the surface of a cylindrical forming member while cooling, and is cut in the flow direction into a sheet-like article while it is taken up downstream.

In the above-described conventional foam forming die, the cross section of the outlet is generally narrowed down to a small size so as to generate sufficient back pressure inside the die, however, such a configuration may cause the shear heat of the molten resin to increase, which makes it difficult to adjust the temperature of the molten resin within a suitable foaming temperature range. Therefore, this limits the types of foaming agents that can be used. More specifically, it is extremely difficult to use a gas with low solubility or a volatile liquid as a foaming agent, and thus a foamed article with a high foaming rate was not obtained using, for example, carbon dioxide or nitrogen, the use of which is desirable in view of environmental protection. The amount of shear heat increases further when the throughput per hour is raised in order to enhance productivity, which undesirably makes it more difficult to appropriately foam a molten resin.

Such a die unfavorably generates a large amount of heat as described above and thus makes it difficult to appropriately foam a thermoplastic resin, in particular, an elastomer with a large shear resistance, or a crystalline resin, such as a polypropylene with a narrow temperature range for appropriately foaming. Furthermore, when the cross section of the outlet is narrowed down as described above, materials with a large cross section or thick materials are difficult to form.

The following problem also arises. Since the above-described die uses a structure such that the molten resin flows as made uniform in widthwise flow rate distribution and is discharged, the molten resin channel requires a delicate configuration and the shearing resistance of the flow of molten resin passing through the outlet must be adjusted. Consequently, it is common practice to make dies through repeatedly modifications, and this causes problems in time and production costs. Further, even if the die is obtained by such difficult design and production procedures, heat generation due to shearing is not usually uniform when the molten resin passes through the narrow outlet, and thus it is difficult to foam uniformly a molten resin and produce a uniform thickness. In particular, differences inmaterial or the rate of extrusion make it impossible to obtain an excellent foamed article, hence there is a lack of universal utility. In order to solve the above-described problems, a complicated gap adjustment device is sometimes formed at the outlet of the die, however, favorable foamed articles with a uniform thickness are not necessarily obtained.

An object of the invention is to solve the above-described problems and to provide a foam forming die which inhibits the generation of shear heat in the outlet, and which can obtain uniformly foamed articles, and which can provide excellent universal utility.

### DISCLOSURE OF THE INVENTION

The object of the present invention can be achieved by a foam forming die comprising: an inlet for inserting a molten resin containing a foaming agent from an extruder, ahollowportion formed so as to permit the molten resin inserted to spread in the widthwise direction, and a channel for discharging the molten resin that has passed through the hollow portion and is spread in the widthwise direction, wherein one end of the channel is narrowed by two rotatable bodies to form a discharge portion, the two rotatable bodies having an outer periphery substantially in the form of a true circle in cross section and being disposed in parallel with their axes extending in the widthwise direction, and the two rotatable bodies can rotate in the molten resin discharging direction.

Preferably, in such a foam forming die, the relationship between the height T of the channel and the smallest gap t between the two rotatable bodies satisfies T>2t, and the relationship between the radius R of at least one rotatable body and the smallest gap t satisfies R≥15t.

The above-described object of the invention can be achieved by a foam forming die comprising: an inlet for inserting a molten resin containing a foaming agent from an extruder, a hollow portion formed so as to permit the molten resin inserted to spread in the widthwise direction, and a channel for discharging the molten resin that has passed through the hollow portion and is spread in the widthwise direction, wherein one end of the channel is narrowed by a rotatable body to form a discharge portion, the rotatable body having an outer periphery substantially in the form of a true circle in cross section and being disposed with its axis extending in the widthwise direction, and the rotatable body can rotate in the molten resin discharging direction.

Preferably, in such a foam forming die, the relationship between the height T of the channel and the smallest gap t between the inner wall surface of the channel and the outer peripheral surface of the rotatable body satisfies T>2t, and the relationship between the radius R of the rotatable body and the smallest gap t satisfies R≥15t.

The above-described object of the invention can be achieved by a foam forming die for forming a plurality of layers comprising: a plurality of inlets for inserting a molten resin containing a foaming agent from an extruder, a hollow portion formed so as to permit the molten resin inserted from the respective inlets to spread in the widthwise direction, and a channel for discharging the molten resin that has joined after passing through the respective hollow portions and is spread in the widthwise direction, wherein one end of the channel is narrowed by two rotatable bodies to form a discharge portion, the two rotatable bodies having an outer periphery substantially in the form of a true circle in cross section and being disposed in parallel with axes extending in the widthwise direction, and the two rotatable bodies can rotate in the molten resin discharging direction.

Preferably, the foam forming die further comprises a rotation adjusting means for increasing or decreasing the speed of rotation or torque of the rotatable body.

Preferably, in the foam forming die, the rotatable body is provided with projections extending from an outer peripheral surface thereof diametrically outward over the entire width.

Preferably, the foam forming die further comprises a forming device for forming a foam-formed article discharged from the discharge portion into a predetermined shape at the downstream side of the discharge portion.

The above-described object of the invention can be achieved by a method of producing a foam-formed article, and the method comprises forming a molten resin into a sheet, film or plate-like foam-formed article with the use of the above-described foam forming die.

The above-described object of the invention can be achieved by a method of producing a foam-formed article, and the method comprises forming a molten resin into a profiled foam-formed article with the use of the above-described foam forming die.

By the use of the above-described foam forming die, a foam-formed article can be formed on the surface of various formed articles or of various materials.

The above-described object of the Invention can be achieved by a method of producing a foam-formed article comprising: producing a formed article in the form of a solid-solution wherein 5% by weight or more of the foaming agent contained in the article is unevaporated, by cooling a rotatable body using the above-described foam-forming die, and producing a foam-formed article by heating the formed article.

### BRIEF DESCRIPTION OF DRAWINGS

Fig. 1 is a cross-sectional plan view of a foam forming die according to a first embodiment of the invention.
Fig. 2 is a cross-sectional side elevation view of the foam forming die shown in FIG. 1.
Figs. 3(a) to (f) are plan views of rotatable bodies used in various embodiments of the invention.
Fig. 4 is a partial cross-sectional view illustrating a principal part of the foam forming die shown in Fig. 1.
Figs. 5 (a) to (e) are views showing some examples of cross-sectional shapes of a discharge portion of the foam forming die of the invention.
Fig. 6 is a cross-sectional side elevation view of the foam forming die of a second embodiment of the invention.
Fig. 7 is a cross-sectional side elevation view of a foam forming die of a third embodiment of the invention.
Fig. 8 is a cross-sectional side elevation view of a foam forming die of a fourth embodiment of the invention.
Fig. 9 is a cross-sectional side elevation view of a foam forming die of a fifth embodiment of the invention.
Fig. 10 is a cross-sectional side elevation view of a foam forming die of a sixth embodiment of the invention.
Fig. 11 is a cross-sectional side elevation view of a foam forming die of a seventh embodiment of the invention.

### BEST MODE FOR CARRYING OUT THE INVENTION

Embodiments of the present invention are described below with reference to the drawings.

### (First Embodiment)

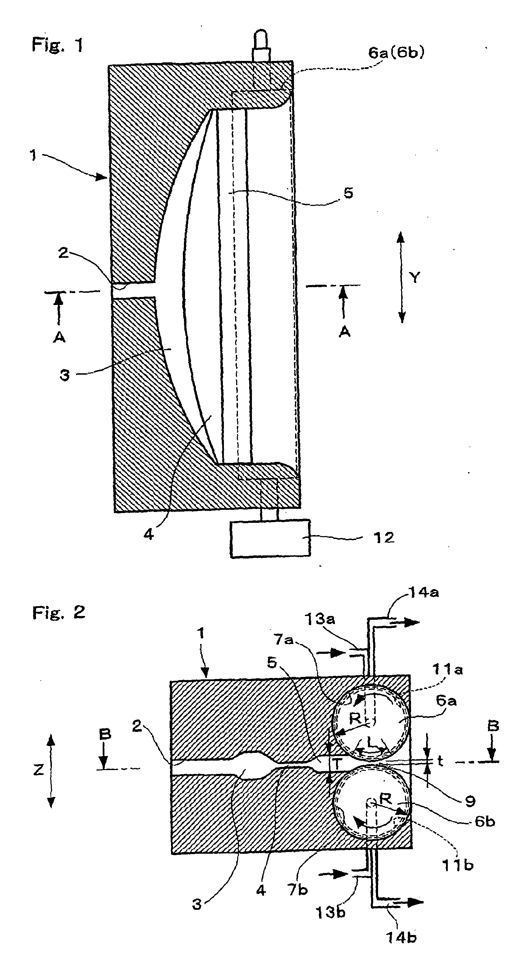

Fig. 1 and Fig. 2 are respectively, a cross-sectional plan view and a cross-sectional side elevation view, showing a foam forming die according to a first embodiment of the invention. Fig. 1 is a cross-sectional view taken along the line B-B in Fig. 2, and Fig. 2 is a cross-sectional view taken along the line A-A in Fig. 1.

With reference to Figs. 1 and 2, the reference numerals denote as follows: 1, a foam forming die; 2, an inlet for supplying a molten resin; 3, first hollow portion; 4, a channel land; 5, a second hollow portion; 6aand6b, roll-shaped rotational bodies; and 8, a discharge portion for discharging a molten resin. A temperature adjusting assembly for heating and cooling, and parts connecting means such as bolts are not shown. In this embodiment, the second hollow portion 5 serves as a channel of the Invention.

In the foam forming die of the present embodiment, the first hollow portion 3 is formed into a coathanger shape so as to cause a molten resin injected through the inlet 2 to dividedly flow widthwise Y. The channel land 4 communicating with the first hollow portion 3 is formed in such a manner that the channel height may be smaller than that of the first hollow portion 3. The channel land 4 communicates, at a position downstream therefrom, with the second hollow portion 5. The second hollow portion 5 is formed into a straight shape, and discharges the molten resin.

As shown in Fig. 2, two contact parts 7a and 7b are formed in the height direction Z of the die body at the end of the downstream side of the second hollow portion 5. The contact parts each have a space substantially circular in cross section. In these contact parts 7a and 7b, respectively, two roll-like rotatable bodies 6a and 6b, which are of the same diameter and have their respective axes extending widthwise Y of the die body 1, are disposed in parallel at a predetermined distance. These two rotatable bodies 6a and 6b thus disposed narrow the end of the downstream side of the second hollow portion 5 so as to form a discharge portion 9 of a rectangular cross section for discharging the molten resin. More specifically, with respect to the discharge portion 9, the height of the channel downstream is smaller than that upstream. The rotation bodies 6a and 6b are in contact with the contact parts 7a and 7b, respectively, so that the molten resin substantially does not leak from other than the above-described discharge portion 9.

The rotatable bodies 6a and 6b are connected to a motor 12 as a rotation adjusting means, and the motor 12 activates the rotatable bodies 6a and 6b to rotate in the directions shown by the arrows, i.e., the molten resin discharging direction, under the state where the surface rotation rate of the rotatable bodies 6a and 6b is of the same. Jackets 11a and 11b, which are connected to a heat medium regulator provided outside the die body 1, are formed inside the rotatable bodies 6a and 6b. A liquid heat medium is introduced to these jackets 11a and 11b from introduction channels 13a and 13b provided outside the die body 1 to circulate through the inside of the rotatable bodies 6a and 6b, and is discharged from discharge channels 14a and 14b provided outside the die body 1.

In order to make the shear amount of the molten resin uniform as much as possible from portion to portion along the widthwise direction, and in order to maintain the pressure inside the die at a higher pressure, it is preferable to diminish the height of the discharge portion 9 (the distance between the rotatable bodies 6a and 6b) and lengthen the length of the channel (the length of the channel, through which the molten resin passes, in the discharge direction between the rotatable bodies 6a and 6b). More specifically, as shown in Fig. 2, it is preferable to diminish the distance t of the narrowest part of the gap between the outer peripheral surfaces of the two rotatable bodies 6a and 6b (hereinafter, referred to as "smallest gap t" in the embodiment), and is preferable to enlarge the diameter of the rotatable bodies 6a and 6b. It is necessary for the smallest gap t to be smaller than the channel height T of the second hollow portion 5 (height in the direction perpendicular to the flow direction in the second hollow portion 5). In contrast, when a thick material is to be formed, the smallest gap t needs to be enlarged. In such a case, the channel length of the discharge portion 9 is lengthened using rotatable bodies 6a and 6b with a further enlarged diameter, thereby maintaining a high pressure inside the die.

In order to maintain a high internal pressure in such a die, it is preferable to adjust the smallest gap t to be 0.05 to 20 mm, more preferably 0.1 to 10 mm. When the smallest gap t is smaller than 0.05 mm, a foamed article is substantially difficult to produce, while when the smallest gap t exceeds 20 mm, a suitable internal pressure is difficult to maintain even if the channel length of the discharge portion 9 is lengthened.

In order to lengthen the channel length, the radius of the rotatable bodies 6a and 6b each is preferably 10 mm or more, more preferably 30 mm or more. When the radius is less than 10 mm, the length over which the rotatable body 6 contacts with the molten resin is short. Only a portion of the outer peripheral surface of each of the rotatable bodies 6 effectively presses the molten resin. When the radius of each of the rotatable bodies 6 is reduced, an effective channel length L is shortened (see Fig. 2). The effective channel length L denotes the portion where pressure can effectively act on the molten resin. As a result, the flow of the molten resin is not sufficiently controlled by friction between the molten resin and the surface of the rotatable bodies, and the molten resin cannot be conveyed at a suitable conveying rate. Further, the ability to adjust the temperature to cool or heat the molten resin is also diminished. Therefore, it is preferable to set the radius of each of the rotatable bodies 6 as described above. However, for practical use, 1500 mm or less is preferable in view of easy production and operation.

It is preferable to adjust the relationship between the above-described dimensions so as to satisfy the following conditions. It is essential that the channel height T is larger than the smallest gap t in view of maintaining internal pressure. When the value of T is small, the flow resistance of the second hollow portion 5 increases, thereby increasing the amount of heat generated due to shearing. Therefore, it is preferable that the relationship between the smallest gap t and the channel height T of the second hollow portion 5 satisfies T>2t. The upper limit of the channel height T is in the range permitted from the view of producing the die, and, in reality, the height T is preferably the same as or less than the distance between the axes (i.e., 2R+t). This is because, in view of maintaining the internal pressure, the effective channel length L cannot possibly be lengthened even when the channel height T exceeds the distance between the axes.

Further, the relationship between the smallest gap t and the radius R of each of the rotatable bodies is preferably R≥15t, more preferably R≥30t. The upper limit of R is as described above. When such a relationship is satisfied, the above-described effective channel length L is appropriately long, thereby applying a sufficient pressure to the molten resin. As a result, the internal pressure of the die can be maintained at a suitable pressure, i.e., 10 kg/cm² or more. The higher the internal pressure, the better, and specifically, 20 kg/cm² or more is preferable, and 30 kg/cm² or more is especially preferable.

As described above, although a channel land 4 is formed between the first hollow portion 3 and the second hollow portion 5, a channel land 4 need not be provided. In such a case, the channel height T is as described above. Alternatively, the first hollow portion 3 and the second hollow portion 5 may be integrated without a channel land 4. In either case, the channel height T of the invention is the channel height of the portion immediately before where the molten resin reaches the rotatable bodies.

The operation of a foam forming die configured as described above is described hereinafter. Initially, the rotatable bodies 6a and 6b are driven at a predetermined speed of rotation or torque in the directions shown by the arrows of Fig. 2 by the motor 12, and the molten resin is supplied under pressure to the inlet 2 from an extruder (not shown). The supplied molten resin spreads in widthwise direction Y in the first hollow portion 3, to be supplied to the second hollow portion 5 via the channel land 4. The molten resin moves by rotation of the rotatablebodies 6a and 6b while it is maintained at ahighpressure under pressure applied by the respective rotatable bodies 6a and 6b, and is then discharged at a constant flow rate from the discharge portion 9. After the molten resin passes through the discharge portion 9 in a state where the pressure is sufficiently increased inside the die body 1, the pressure thereof is released to gradually reduce, whereby numerous cells are generated and growing in the molten resin.

In the foam forming process, although some rotation driving force acts on the rotatable bodies 6a and 6b due to the flow of the molten resin supplied to the second hollow portion 5, the speed of rotation is maintained at a constant rate since the rotatable bodies 6a and 6b are coupled to the motor 12 and braked. Thus, the flow of molten resin inside the die is braked, whereby it is conveyed under temperature control without generating excessive shearing or friction while it is maintained at a high pressure. It is therefore possible to reduce the amount of heat generated in the molten resin and to adjust the temperature of the molten resin to a suitable foaming temperature, and further to discharge the molten resin from the discharge portion 9 with a uniform widthwise flow rate distribution.

In cases where the molten resin has a high viscosity or a high friction resistance, etc., the rotatable bodies 6a and 6b can be served as a discharge pump to lessen the burden on the extruder (not shown). It is therefore possible to reduce the quantity of heat generated in the molten resin and to make the molten resin uniform in temperature in the extruder, assuring the molten resin of a uniform flow rate distribution after being supplied to the inside of the die.

In prior art foam forming dies, the internal pressure of the die is raised due to the shear stress of the molten resin generated by extremely reducing the cross section of the discharge channel, and particularly in reducing the lip gap, thereby suppressing foaming inside the die or separation of foaming-agent gas. However, this configuration causes the problem that the molten resin is not maintained at a suitable foam forming temperature due to extremely high shearing or frictional heat. In contrast, the foam forming die of the present embodiment achieves the following aspects which were hitherto not easily achieved or were completely not possible.

The foam forming die of this embodiment is configured in such a manner that the discharge portion 9 is formed by reducing the channel height of one end of the second hollow portion 5 by a pair of rotatable bodies 6a and 6b, and the molten resin is discharged from the discharge portion 9, i.e., the gap between the rotatable bodies 6a and 6b. Since the molten resin is discharged by the rotation of the rotatable bodies 6a and 6b, excessive shearing force is not applied. As a result, the molten resin can be discharged without generating excessive shear heat while it is maintained at a high pressure. Therefore, the resin temperature can be precisely controlled, and even a resin with a narrow range of a suitable foaming temperature can be readily foamed, and minute and high-quality foam cells can be formed. For example, a crystalline resin, such as a generally-used polypropylene, etc., in which the viscosity greatly varies with temperature, can be easily foamed. A foamed article with a higher expansion rate can be obtained using a larger amount of foaming agents. Further, a physical foaming agent with low solubility can be used, which makes it possible to foam at a higher rate using, for example, carbon dioxide or nitrogen, which are desirable from the viewpoint of environmental protection but is difficult to use technically.

Further, the foam forming die of the invention can uniformly extrude and foam a material, such as an elastomer or the like, which is hard to extrude uniformly or to foam in extrusion foaming due to high viscoelasticity at the time of melting. Since the shear amount is small and excessive heat does not generate, degradation can be suppressed even in a resin which is easy to degrade. Therefore, it is possible to readily produce a foamed product with favorable quality.

Still further, even if the smallest gap t of the discharge portion 9 is enlarged, it is possible to lengthen the channel length of the discharge portion 9 by enlarging the radius of each of the rotatable bodies 6a and 6b. Therefore, the foam forming die of the invention makes it possible to manufacture a thicker foamed product since the pressure can be maintained by lengthening the channel length. In contrast, even if the smallest gap t is reduced, a thin foamed sheet can be efficiently produced since an increased rotation speed of the rotatable bodies 6a and 6b can avoid the temperature from rising abnormally.

In addition to the effect of reducing amount of heat generation due to shearing, the surface temperature of the rotatable bodies 6a and 6b can be adjusted by flowing a heat medium through the rotatable bodies 6a and 6b, whereby the resin temperature can be easily controlled with precision. This makes it possible to provide the above-described foamed article of favorable quality. Various methods can be employed for adjusting the temperature of the rotatable bodies 6a and 6b besides circulating the above-mentioned heat medium, and for example, an electronic cooling element, etc. can be used.

Since the shear amount is small and uniform, a foam-formed article with little orientation, especially a foam-formed article with little orientation of longitudinal direction can be obtained. More specifically, a foamed article which is uniform in thickness and apparent specific gravity at each point along the widthwise direction and suffers little from shrinkage deformation, heat deformation, etc., can be obtained.

The molten resin is conveyed and discharged by the rotation of the rotatable bodies 6a and 6b, thereby avoiding troubles which easily occur at the time of low-temperature extrusion, such as the clogging of the discharge portion by solidified resin and/or contaminated particles, and as a result productivity can be further enhanced.

In designing the die, it is not necessary to analyze complex flow characteristics as in the prior art dies. More specifically, the molten resin is discharged by the rotation of the rotatable bodies 6a and 6b, which eliminates the necessity of adjusting the shearing amount from portion to portion along the widthwise direction. Thus, there is no necessity of considering complex problems such as differing amounts of heat generation and differing viscosities from portion to portion, which facilitates designing the die and eliminates the necessity of trial modification, thereby providing a die with excellent universal utility.

The first hollow portion 3 is formed in a coathanger shape in the embodiment, however it can be readily designed in desired configurations such as a straight form, tapered form, etc. Alternatively, a configuration which is easy to design, such as a fan shape in which the channel land 4 and the second hollow portion 5 have been omitted, or the like can be adopted. In this case, the first hollow portion 3 serves as a channel of the invention. The inlet 2 can be formed at a desired position such as an upper surface, a bottom surface, a side surface, etc.. in addition to the back of the die body 1.

Although the pair of rotatable bodies 6a and 6b used in the present embodiment are of the same diameter and the rotation speed thereof is adjusted to give the same surface rotation rate, rotatable bodies of different diameters may however be used in combination. The surface rotation rate of the rotatable bodies each is not necessarily the same, however, in view of easy control, it is desirable that they are of the same.

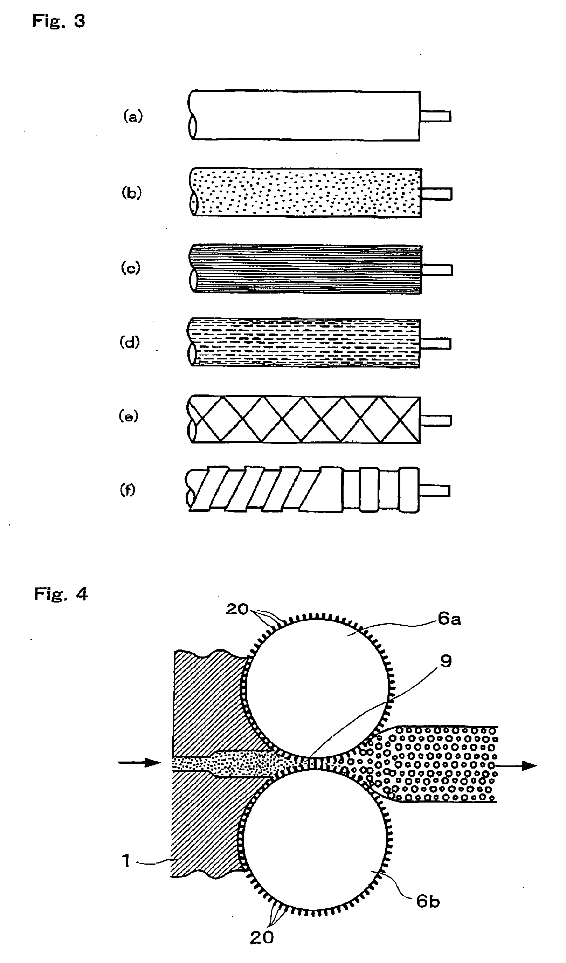

The surface of each of the rotatable bodies 6a and 6b maybe smooth-surfaced or rough-surfaced. More specifically, as shown in Fig. 3, the surface of each of the rotatable bodies 6 a and 6b may be (a) a smooth surface, (b) as lightly rough surface. (c) a surface with many long blades disposed in the axis direction of a slight height, (d) a surface with many short blades disposed in the axis direction of a slight height, (e) a surface with pattern-like projections, and (f) a surface grooved along the periphery. Other desired forms can be employed. For example, a rotatable body as shown in Fig. 3(f) can be constituted by combining two or more modules of different forms on the same axis.

As shown in Fig. 4. when many projections 20 which extend in the radial direction are formed on the surface of each of the rotatable bodies 6a and 6b instead of fine roughness, these projections 20 sink into the molten resin, whereby shearing flow generated in the molten resin by back pressure is suppressed. As a result, the pressure inside the die body 1 can be effectively maintained. Thus, the pressure is reduced when the molten resin is discharged from the discharge portion 9, which efficiently promotes the generation and growth of foam cells in the molten resin. The height of the projections 20 may be substantially the same. Alternatively, usable are projections 20 in which the top of each can be connected by drawing a line that has a regular pattern. Any number of projections 20 can be employed without limitation. Marks produced when the projections 20 sink into the molten resin are reduced by foaming, and therefore cause no problems.

Further, such projections 20 may be configured to be accommodated inside the rotatable bodies 6a and 6b. For example, when the projections 20 pass the contact parts 7a and 7b, the projections 15 are depressed into the interior of the rotatable bodies 6a and 6b, while they return to the original projection state by the spring power or the like after passing the contact parts 7a and 7b. Thus, the surfaces of the rotatable bodies 6a and 6b closely contact with the contact parts 7a and 7b, respectively, which prevents leakage of the molten resin from the contact parts 7a and 7b.

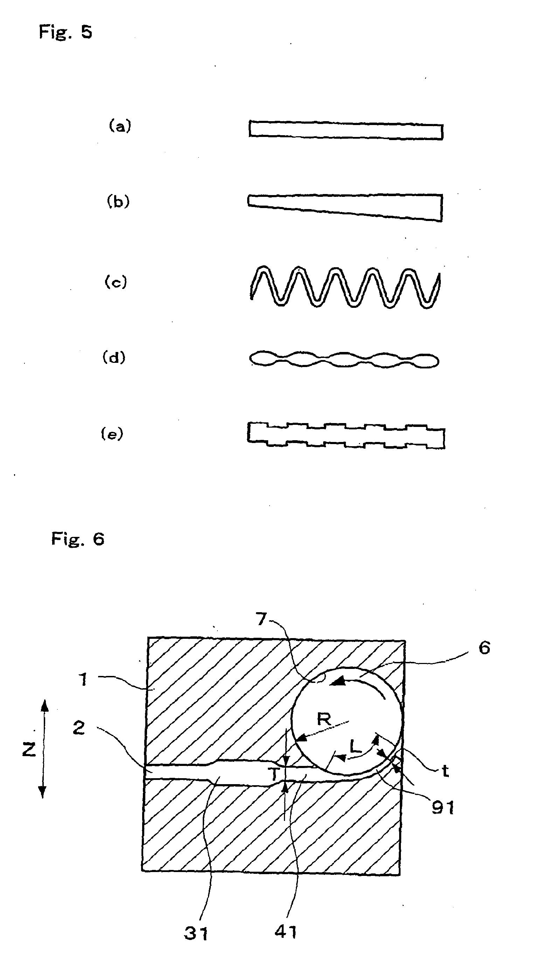

In this embodiment, the cross sectional shape of the discharge portion 9 is rectangular, but is however not limited to this. More specifically, the cross sectional shape of the discharge portion can be suitably formed as shown in Fig. 5 by changing the form of the rotatable bodies 6a and 6b, such as (a) a rectangular form (b) a trapezoid form, (c) a wavy form, and (d) and (e) modified forms in which predetermined patterns are repeated. Thus, in addition to flat plates, it is possible to efficiently manufacture profiled articles such as flat plates which have varying degrees of thickness, wavy plates, striped pattern plates, etc.

In this embodiment, the gap between the rotatable bodies 6a and 6b is rendered uniform in the widthwise direction, which makes the flow amount of molten resin discharged from the discharge portion 9 constant from portion to portion along the widthwise direction. A change in the gap can vary the flow rate distribution in the width direction, whereby the thickness of a foam-formed article can be intentionally varied in the width direction, or a foam-formed article can be formed into a striped pattern. Therefore, a profiled sheet-like or plate-like foam-formed article can be easily manufactured. Such a profiled foam-formed article can be manufactured by changing the surface shape of the rotatable bodies 6a and 6b into a suitable shape or by inclining either one or both of the axes of the rotatable bodies 6a and 6b.

Conical-shaped rotatable bodies can also be used in combination instead of the above-described cylindrical rotatable bodies as the rotatable bodies 6a and 6b. In such a case, two rotatable bodies may be combined so as to form a gap uniform in the widthwise direction or to form a variable gap.

The rotatable bodies 6a and 6b need to have their outer periphery substantially circular in cross section, although they may vary somewhat in the circumference direction or be roughened to the extent that leakage of the molten resin from the contact parts 7a and 7b does not cause any problem. Thus, a foam-formed product can be given a thickness which varies in a stripedpattern. In such a case, either one or both rotatable bodies may be deformed

The following method can be mentioned as an additional method using the above-described foam forming die. The molten resin is strongly cooled by adjusting the temperature of the rotatable body, to obtain a solid-solution formed article in which 5% by weight or more of the contained foaming agent is unevaporated. The formed article thus obtained is heated to gasify the unevaporated foaming agent, thereby providing a foam-formed article. As 5% by weight or more of the foaming agent is unevaporated, this means that the foaming agent contained in the formed article can be completely unevaporated.

According to the method, desired formed articles, such as a formed article which is entirely unfoamed and contains therethroughout non-evaporated gas, or a formed article provided with a skin layer which is unfoamed or has a low expansion rate can be produced. Due to their high expandability, these formed articles can be used in wide-range applications, such as thermoforming, cutting and forming, etc. The gas content is calculated assuming that foam cells, if they are formed, are filled with the foaming agent at atmospheric pressure.

The following method can be mentioned as a further additional method using the above-mentioned foaming die. More specifically, a solid article in which reactions, such as pyrolysis or the like of the foaming agent, etc. do not substantially proceed, or a foam-formed article having residual unreacted foaming agent, is manufactured from a resin containing a chemical foaming agent due to the property of being able to carry out extrusion forming while maintaining the resin temperature at low temperature. These articles can be formed into further foam-formed articles by reheating, and the application of the method is the same as above.

The above-mentioned manufacturing methods can be applied to foam forming dies according to the following embodiments.

### (Second Embodiment)

A foam forming die of a second embodiment of the invention is explained hereinafter. Fig. 6 is a cross-sectional side elevation view of a foam forming die of a second embodiment of the invention. The present embodiment is different from the first embodiment in that one rotatable body is provided at the channel.

As shown in Fig. 6, according to the present embodiment, a hollow portion 31 continuing from an inlet 2 is formed into a straight manifold, and the molten resin is discharged through a channel land 41 formed downstream from the hollow portion. A roll-like rotatable body 6 is disposed at the end of the downstream side of the channel land 41. The end of the channel land 41 is narrowed by the rotatable body 6 to form a discharge portion 91 for discharging the molten resin. More specifically, with respect to the discharge portion 91, the channel height at the downstream side is rendered smaller than that of the channel at the upstream side. As in the first embodiment, the rotatable body 6 has an outer periphery substantially in the form of a true circle in cross section, and is an elongated member having an effective surface length approximately equal to the widthwise length of the channel land 41. The outer peripheral surface of the rotatable body 6 is partially in contact with a contact part 7 substantially in the form of a circle in cross section formed at the die body 1, as in the first embodiment. According to the present embodiment, the channel land 41 serves as a channel of the invention.

The rotatable body 6 is connected to a motor (not shown) as a rotation adjusting means, and is configured to rotate in the direction shown by the arrow, i.e., the molten resin discharging direction, at a predetermined rotation rate. As in the first embodiment, the rotatable body 6 is provided with a temperature adjusting means (not shown), thereby adjusting the surface temperature.

To make the molten resin shearing rate and amount of shear as uniform as possible at every portion along the widthwise direction, and to maintain the inner pressure of the die body 1 at a higher pressure, it is desirable to diminish the height of the discharge portion 91 (distance between the inner wall surface of the channel land 41 and the outer periphery of the rotatable body 6) to the extent that excessive heat generation due to shearing does not occur. More specifically, it is preferable to reduce the narrowest distance t between the inner wall surface of the channel land 41 and the rotatable body 6 (hereinafter in the present embodiment referred to as a " smallest gap t") and to enlarge the radius of the rotatable body 6. The smallest gap t needs to be smaller than the channel height T of the channel land 41 (height of the channel land 41 perpendicular to the flow direction).

As suitable dimensions, the smallest gap t is preferably 0.1 to 20 mm, more preferably 0.2 to 15 mm. When the smallest gap t is smaller than 0.1 mm, it is difficult to manufacture a foam-formed article, and if it exceeds 20 mm, it is difficult to maintain a suitable internal pressure even if the channel length is elongated.

To lengthen the channel length, it is preferable that the radius R of the rotatable body 6 be 10 mm or more , more preferably 30 mm or more. When the radius R is smaller than 10 mm, the length over which the rotatable body contacts with the molten resin is reduced, thereby shortening the above-described effective channel length L. As a result, the flow of the molten resin is not sufficiently controlled by the friction of the surface of the rotatable body, or the molten resin is not conveyed at a suitable rate. In order to avoid such problems, the radius R of the rotatable body 6 is preferably set as described above. However, for practical use, 1500 mm or less is preferable in view of the ease of producing and operating the dies.

The relationship among each dimension described above is preferably as follows. As described above, in view of maintaining the internal pressure, it is essential that the channel height T of the channel land 41 is larger than the smallest gap t. For practical use, the upper limit of the channel height T is in the range permitted from the view of the die production, and T is preferably no more than the total distance (R+t) of the radius R of the rotatable body and the smallest gap t. This is because, in view of maintaining the internal pressure, the effective channel length L cannot possibly be lengthened, even if the channel height T exceeds the above-mentioned total length. T always needs to be greater t, and T>2t is preferable for the same reason as in the above first embodiment.

The relationship between the smallest gap t and the radius R of the rotatable body is preferably R≥15t, more preferably R≥30t. The upper limit of R is as above. When such a relationship is satisfied, the effective channel length L is appropriately lengthened, thereby applying a sufficient pressure to the molten resin. As a result, the internal pressure of the die can be maintained at a suitable pressure, i.e., 10 kg/cm² or more. The higher the internal pressure, the better, and specifically, 20 kg/cm² or more is preferable, and 30 kg/cm² or more is even more preferable.

In the above description, the channel land 41 is formed downstream from the hollow portion 31, and the second hollow portion is formed downstream from the channel land 41, as in the first embodiment. In such a case, the above-mentionedchannel height T is the channel height of the second hollow portion. In contrast, the channel land 41 may not be formed or it may be integrated with the hollow portion 31. In either case, the height of the portion immediately before where the molten resin reaches the rotatable body is the channel height T of the invention.

The operation of the above-described foam-forming die is hereafter described. Initially, the motor is driven to rotate the rotatable body 6 in the direction shown by the arrow of Fig. 6 at a predetermined rotation rate, and simultaneously the molten resin is injected under pressure into the inlet 2 from an extruder (not shown). The supplied molten resin spreads in the widthwise direction in the hollow portion 31, and is discharged through the channel land 41 from the discharge portion 91 by rotation of the rotatable body 6. Although a certain amount of rotation driving force acts on the rotatable body 6 by the flow of the molten resin by the extrusion pressure of the extruder, a predetermined rotation rate can be maintained since the rotatable body 6 is connected to the motor. The molten resin contacting with the rotatable body 6 is subjected to temperature adjustment, and is discharged from the rectangular discharge portion 91 in a state where the flow rate distribution in the widthwise direction is uniform. At this time, the molten resin entering the discharge portion 91 is discharged by the rotation of the rotatable body 6 under a shearing action substantially uniform at every portion along the widthwise direction, and is then foamed.

According to the present embodiment, the same effects as in the above-described first embodiment can be attained, and in addition thereto, the configuration of a single rotatable body facilitates designing the die and reduces the production costs.

As in the first embodiment, the shape, etc. of the rotatable body 6 can be modified. The shapes of the outer peripheral surface of the rotatable body 6 and the inner surface of the end of the channel land 41 may be altered to form discharge portions of various modified shapes as shown in Fig. 5, thereby obtaining a foam-formed article of modified shape. Such modification is also possible in the following embodiments.

### (Third embodiment)

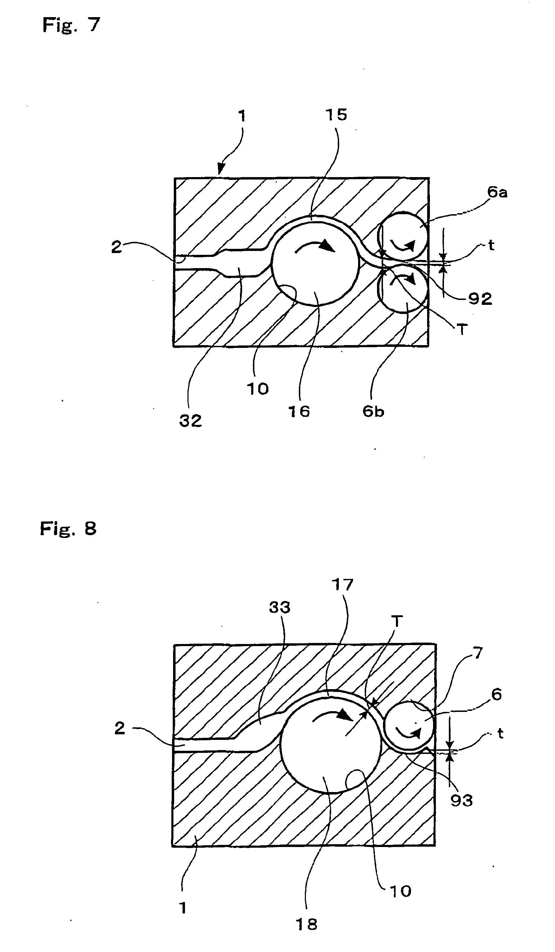

A foam forming die of a third embodiment of the invention is described hereafter. Fig. 7 is a cross-sectional side elevation view of a foam forming die of a third embodiment of the invention. The foam forming die of the present embodiment is provided with another rotatable body upstream from the discharge portion of the foam forming die of the first embodiment.

With reference to Fig. 7. the reference numerals denote as follows: 32, a straight-manifold hollow portion; 15, a channel; and 16, a roll-like intermediate rotatable body.

In the present embodiment, the straight-hollow portion 32 is formed continuing from the inlet 2, and an accommodating portion 10 substantially circular in cross section is formed downstream from the hollow portion 32. An intermediate rotatable body 16 with its axis extending in the widthwise direction is rotatably disposed inside the accommodating portion 10. A channel 15 in the shape of an arc in cross section is formed between the upper half of the outer peripheral surface of the intermediate rotatable body 16 and the inner wall surface of the die body 1, and the above-described hollow portion 32 is connected to the channel 15. The molten resin is discharged through the channel 15. A pair of rotatable bodies 6a and 6b are disposed at the end at the downstream side of the channel 15 as in the first embodiment, and the end of the channel 15 is narrowed by the pair of rotatable bodies 6a and 6b, to form a discharge portion 92. The radius of the rotatable bodies 6a and 6b and the smallest gap t between the rotatable bodies 6a and 6b are as described in the first embodiment, and the smallest gap t is smaller than the channel height T of the channel 15. The above-described channel 15 forms a channel of the invention.

The intermediate rotatable body 16 has substantially the same length as the width of the channel 15 (the length in the direction Y), and a motor (not shown) is connected thereto so as to rotate in the direction shown by the arrow, i.e., the molten resin discharging direction. The intermediate rotatable body 16 is provided with the same temperature adjusting unit (not shown) as in the rotatable bodies 6a and 6b of the first embodiment, and so the surface temperature can be adjusted, as required.

Next, the operation of the foam forming die of the above-described configuration is explained. The molten resin supplied to the inlet 2 from an extruder spreads in the widthwise direction in the hollow portion 32, and enters the channel 15. The intermediate rotatable body 16 conveys, by the rotation, a predetermined amount of the molten resin while suppressing the flow of molten resin. Simultaneously, the temperature of the molten resin is adjusted by the temperature adjusting unit. The molten resin conveyed in a predetermined amount is discharged from the gap between the rotatable bodies 6a and 6b, i.e., the discharge portion 92, in a similar manner to the first embodiment.

According to the present embodiment, the same effects can be obtained, and in addition thereto, the intermediate rotatable body 16 makes it possible to render the flow of molten resin uniform widthwise and to adjust the temperature of the molten resin. Further, setting of the pressure inside the die body 1 is facilitated, which eliminates the necessity of complicated analyses in designing the channel of the die. Therefore, the design and production of the die is further facilitated.

As in the rotatable body 6 as described in the first embodiment, the form, surface shape, materials, etc. of the intermediate rotatable body 16 can be selected from a wide range. Parts other than the intermediate rotatable body 16 and the channel 15 can be configured in the same manner as in the first embodiment.

In the present embodiment, the number of Intermediate rotatable bodies between the inlet 2 and the discharge portion 92 is one, but it is not limited thereto; two or more intermediate rotatable bodies 16 may be provided along the flow direction of the molten resin. The intermediate rotatable bodies may be disposed on one side of the channel 15 or may be disposed in such a manner to sandwich the channel 15.

### (Fourth embodiment)

A foam forming die of a fourth embodiment of the invention is described hereafter. Fig. 8 is a cross-sectional side elevation view of a foam forming die of a fourth embodiment of the invention. The foam forming die of the present embodiment is provided with another rotatable body upstream from the discharge portion of the foam forming die of the second embodiment.

With reference to Fig. 8, the reference numeral 17 denotes a channel, 18 denotes an intermediate rotatable body, and 33 denotes a straight-manifold type hollow portion.

In the present embodiment, the straight-manifold hollow portion 33 is formed continuing the inlet 2, and an accommodating portion 10 substantially circular in cross section is formed downstream from the hollow portion 33. An intermediate rotatable body 18 with its axis extending in the widthwise direction is rotatably disposed inside the accommodating portion 10. The hollow portion 33 communicates with a channel 17 in the shape of an arc in cross section formed by the upper half of the outer peripheral surface of the Intermediate rotatable body 18 and the inner wall surface of the die body 1. The molten resin is discharged through the channel 17. A single rotatable body 6 is disposed at the end at the downstream side of the channel 17 as in the second embodiment, and the end of the channel 17 is narrowed by the rotatable body 6, to form a discharge portion 93 for discharging the molten resin. The radius of the rotatable bodies 6a and 6b and the smallest gap t of the discharge portion 93 are as described in the second embodiment, and the smallest gap t is smaller than the channel height T of the channel 17. The above-described channel 17 serves as a channel of the invention.

The intermediate rotatable body 18 has substantially the same length as the width of the channel 17 (the length in the direction Y), and a motor is connected thereto so as to rotate in the direction shown by the arrow, i.e., the molten resin discharging direction, in a similar manner to the third embodiment. As in the third embodiment, the intermediate rotatable body 16 is similarly provided with a temperature adjusting unit (not shown), and thus the surface temperature can be adjusted as required.

Next, the operation of a foam forming die of the above-described configuration is explained. The molten resin supplied to the inlet 2 from an extruder spreads in the widthwise direction in the hollow portion 33, and enters the channel 17. The intermediate rotatable body 18 conveys the molten resin by the rotation in a predetermined amount to the discharge portion disposed downstream while suppressing the flow of molten resin. Simultaneously, the temperature of the molten resin is adjusted. The rotatable body 6 is operated in a similar manner to the second embodiment, to discharge the molten resin from discharge portion 93.

According to the present embodiment, the same effects as in the second embodiment can be attained, and in addition thereto, the intermediate rotatable body 18 makes it possible to render the flow of molten resin uniform widthwise. The pressure inside the die can be easily set, thereby facilitating the design of the die.

As in the third embodiment, the number of intermediate rotatable bodies and the positions thereof can be altered.

### (Fifth Embodiment)

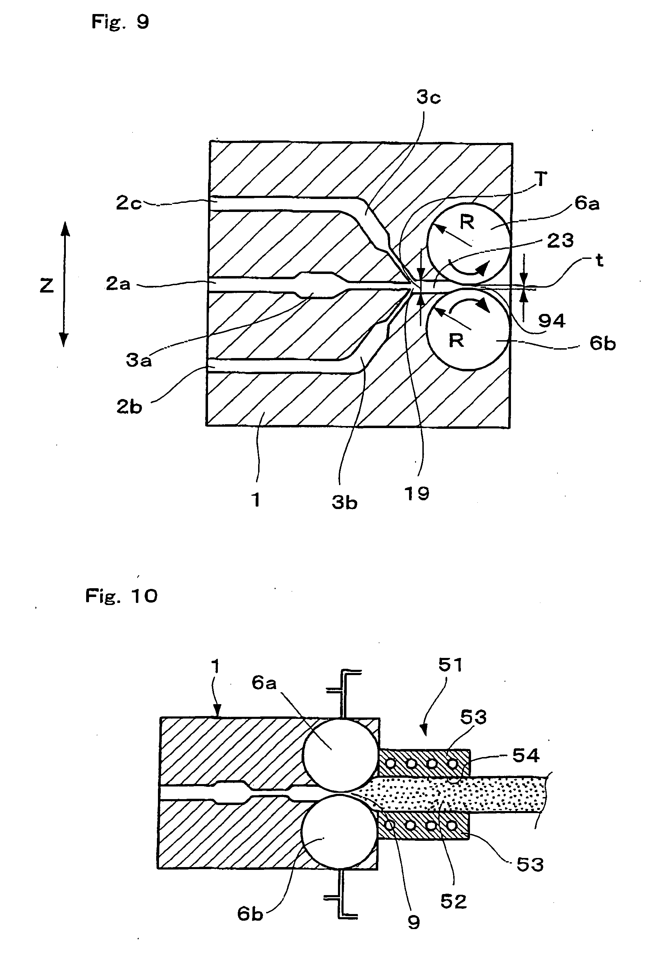

A foam forming die of afifthembodiment of the invention is explained. Fig. 9 is a cross-sectional side elevation view of a foam forming die of a fifth embodiment of the invention. The foam forming die of this embodiment is intended to form a multilayer foam-formed article by introducing molten resins from a plurality of inlets.

As shown in Fig. 9, the foam forming die of the present embodiment comprises three inlets 2a, 2b, and 2c. The respective inlets 2a, 2b, and 2c are connected to hollow portions 3a, 3b, and 3c, respectively. Each hollow portion has aslightlyenlarged channel height and spreads in the widthwise direction (the direction of Y) - The molten resins join at a confluence portion 19 via each of the hollow portion 3a, 3b, and 3c, to be discharged from the channel 23. A pair of rotatable bodies 6a and 6b, which are similar to those of the first embodiment, are disposed at one end of the channel 23, and the end of the downstream side of the channel 23 is narrowed by these two rotatable bodies 6a and 6b to form a discharge portion 94. The distance t of the narrowest part of the discharge portion 94 between the outer peripheral surfaces of the two rotatable bodies 6a and 6b (hereinafter, referred to as the "narrowest gap t") is made smaller than the channel height T (height in the direction perpendicular to the direction of flow of the channel) of a channel from the confluence portion 19 to the discharge portion 94. These dimensions, i.e., the smallest gap t, the channel height T, and the radius R of the rotatable body, are as described in the first embodiment. The channel 23 serves as the channel of the invention.

According to this configuration, molten resins injected from the three inlets 2a, 2b, and 2c join at the confluence portion 19 to be discharged from the discharge portion 94 via the channel 23, thereby forming a three-layer foam-formed article.

Instead of causing the molten resins for forming respective resin layers to join at the confluence portion 19, some or all of the molten resins may be discharged from individual outlets and thereafter allowed to join. There is no limitation to the number of molten resins to be combined. More specifically, the number of inlets 2 is not limited to three as described above. Instead of providing individual inlets, some or all of the inlets may be branched out in the interior of the die. All the layers need not be formed of a foam-formed article. Desired parts may not be foamed or only the layer of a part may be foamed.

While such a multilayer die is useful for multilayer extrusion, this mode of extrusion can be alternatively practiced by using a multilayer feed block in combination with one of the foregoing embodiments. As another embodiment of multilayer extrusion, by incorporating the structure of the desired one of the foregoing embodiments into a profile die, a flat resin layer can be formed on a portion of the surface of an article of complex cross sectional shape.

Although two rotatable bodies are provided in the present embodiment, a foam-formed article can be formed using a single rotatable body as described in the second embodiment.

### (Sixth embodiment)

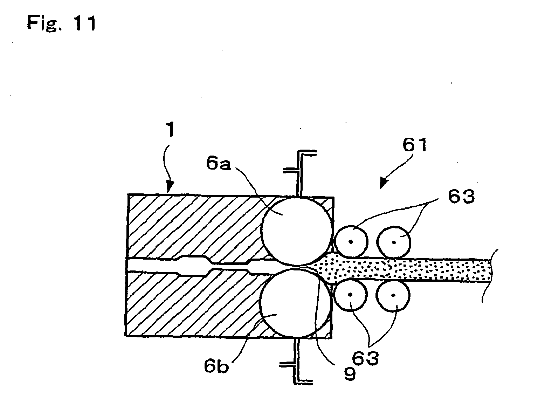

A sixth embodiment of the invention is described hereafter. In this embodiment, a forming device to be attached to one of the above-described foam forming dies is explained. Fig. 10 is a cross-sectional side view which illustrates a foam forming process conducted by attaching a forming device to the foam forming die of the first embodiment of the invention.

As shown in Fig. 10, a forming device 51 is provided downstream from the discharge portion 9 of the foam forming die of the first embodiment. The forming device 51 comprises a pair of forming members 53 which vertically sandwich the molten resin discharged from the discharge portion 9 to form a channel 52 of rectangular cross section, and the forming members 53 are composed of a heat cooling jacket. A heat cooling medium circulates inside the heat cooling jackets 53 to adjust the temperature of a foam-formed article. A contact surface 54 which contacts with a foam-formed article in the heat cooling jackets 53 is coated with a fluororesin. The cross-sectional shape of the article channel 52 formed by the heat cooling jackets 53 may be rectangular as described above or may be modified to other shapes. The length in the widthwise direction may be regulated by closing the sides of the channel. The channel 52 can be formed into any shape as desired. For example, the channel 52 can be designed such that the thickness of the molten resin increases in relation to the flow thereof, the thickness of the molten resin is made uniform after once being increased, or the thickness is narrowed down at a portion downstream.

The configuration of the forming device 51 is not limited to this. For example, the heat cooling jackets 53 may not be provided, and another temperature regulator may be provided. A forming device having a contact surface 54 with no coating can be selected. For example, a method for supplying a lubricant using a porous material for the contact surface 54 can be used. A method of forming a foamed article with vacuum suction by the contact surface 54 formed by porous material is known, and a well-known method can be suitably incorporated. In Fig. 10, the forming device 51 is arranged to contact with the rotatable bodies 6a and 6b, and it may be spaced apart therefrom.

By providing the forming device 51, the molten resin in a softened state is securely formed and cooled to some extent, and the formed and cooled molten resin is then taken up by a take-up unit.

The following advantages can be obtained by the above-described configuration. The foam-formed article that is discharged from the foam-forming die is not always formed into a final product that has a cross-sectional shape similar to the shape of the discharge portion. For example, the cross-sectional shape may sometimes be wavelike. The forming device 51 allows the foam-formed article to be formed into a desired cross-sectional shape.

Needless to say, although the forming device 51 is combined with the die of the first embodiment in the above description, it can be combined with the die of any embodiment. The forming device 51 can be provided with a device serving as a doctor knife in contact with the rotatable bodies 6 or in the vicinity thereof. An air knife or the like which facilitates the release of the resin from the rotatable bodies 6 can be used.

### (Seventh embodiment)

A seventh embodiment of the invention is described hereafter. In this embodiment, a description will be given of other devices which may be additionally provided with each of the above-described foam forming dies. Fig. 11 is a cross-sectional side elevation view which illustrates the foam forming condition when a forming device is attached to the foam forming die of the first embodiment of the invention.

As shown in Fig. 11, a foam forming die of the present embodiment is provided with a forming device downstream from the discharge portion 9 of the foam forming die of the first embodiment in the same manner as in the sixth embodiment. A forming device 61 is provided with roll units which vertically press a foam-formed article discharged from the discharge portion 9, and each roller 63 constituting such roll units is provided with a temperature adjusting unit (not shown). The rollers 63 are connected to a motor to rotate at a desired rate, thereby conveying the foam-formed article forward while forming the foam-formed article.

The forming device 61 can suppress surging (corrugations generated by foam expanding in the widthwise direction) of the formed article which may occur depending on production conditions, and the formed article is taken up by a take-up unit under cooling solidification.

According to such a configuration, the same effects as in the above-described sixth embodiment can be acquired. More specifically, the foam-formed article discharged from the discharge portion 9 can be formed into a desired shape.

Similarly, although the forming device is provided with the foam-forming die of the first embodiment in the above description, it can be combined with the foam-forming die of any embodiment. The number and shape of rollers can be suitably altered as required.

Although various embodiments of the invention are described above in detail, the specific modes of practicing the invention are of course not limited to these embodiments. For example, the speed of rotation of the rotatable bodies need not always be constant as in the foregoing embodiments, and can be altered, for example, to periodically to vary the thickness of the formed article.

A motor serving as a rotation adjusting means may be operated by manual control as means independent of the operation of the extruder. Alternatively, the adjusting means may be operated automatically in connection with the operation of the extruder. In the latter case, it is desirable to provide a mechanism for relating the speed of rotation or torque of the motor to the speed of rotation of any extruder screw so as to maintain a specified pressure at a position upstream from the rotatable body. Alternatively, when a pressure detection means for detecting the pressure at a position upstream from the rotatable body is provided, a rotation control means for automatically controlling the rotation adjusting means or the speed of rotation of an extruder screw based on the detected pressure can be provided.

The extruder to be used with the foregoing embodiments may be a single-screw extruder, twin-screw extruder, multiscrew extruder, or rotary extruder. Such extruders may be vented or nonvented. Also it is not necessary to use a device which is called an extruder, but any device which can supply a fluid under pressure can be used. Not only the extruder is usable singly but a plurality of extruders of the same kind or different kinds can be used as connected together in series or in parallel. In the case where a plurality of extruders are used, the same kind or different kinds of materials are co-extruded to obtain a plate of multilayer or a profile sheeting. Extruders can be provided with suitable unit devices such as a known gear pump or static mixer, or with a foaming agent injector.

In order to adjust the thickness of the foam-formed article, it is desirable to adjust the gap between the two rotatable bodies 6a and 6b or between the rotatable body 6 and the inner wall surface of the channel, and it is of course desirable to move a contact part in such a case.

Any material usable for commonly-used foam forming dies can be used for the die body 1 in the embodiments described above, and specific examples include metallic substances, such as stainless steels, carbon steels, thermally conductive copper alloys, corrosion-resistant alloys, etc. The inner wall surface of the die may be hardened with chromium, various kinds of platings, nitriding treatments, etc., as required. In particular, it is generally desirable that the contact part 7 be composed of a wear resistant material, such as nitride-treated steel; however various metal platings, such as chromium, etc., composite platings with a fluororesin, fluororesin coatings, ceramic coatings, silicone impregnated metal, etc. can be used.

Any metallic material, such as carbon steel, and ceramic materials can be used for the rotatable body 6 without limitation insofar as the material is imparted with stiffness, hardness, and heat-resistance properties. The rotatable body 6 can be surface treated. Surface treatment is conducted by using various metal platings, such as chromium, etc., composite platings with a fluororesin, fluororesin coatings, ceramic coatings, silicone-impregnated metals, etc. As with the contact part 7, a wear-resistant nitride copper can also be used.

Further, in order to adjust the temperature of the molten resin, and in particular to eliminate the heat generated due to shearing of the molten resin, it is desirable to form a passageway for passing a heat medium there through in the interior of the die body 1 in the same manner as in the rotatable body 6 as described above, or to provide a temperature adjusting unit comprising a heat pipe, electronic cooling element, or the like.

Examples of materials to be extruded by the foam forming die of the present invention are high-molecular-weight materials which melt when heated, such as thermoplastic resins, thermosetting resins before curing, rubbers before vulcanization, hotmelt adhesive compositions, etc. Usable as a foaming agent is so-called chemical foaming agents which evolve a gas, for example, when thermally decomposed, so-called physical foaming agents such as volatile gases, or the like.

As is clear from the above description, according to the foam forming die of the invention, two rotatable bodies with their axes extending in the widthwise direction are disposed in parallel, and these rotatable bodies narrow one end of a channel through which the molten resin is discharged to form a discharge portion. The molten resin is then discharged by the rotation of the rotatable bodies, thereby forming a foamed article. Even if the discharge portion for discharging the molten resin is narrowed, a great shearing force does not act on the molten resin as it does in prior art dies, thereby suppressing heat generation due to shearing while a high pressure can be maintained.

Accordingly, even foaming agents with low solubility or high boiling point can be used in a large amount, thereby producing a foam-formed article with a high expansion rate. Because the molten resin is discharged by the rotation of the rotatable bodies, the shear amount is small and uniform in the widthwise direction and the molten resin flowing direction. Therefore, it is possible to efficiently form foam-formed articles with physical properties that have a small dependence on orientation and with high uniformity in which thickness variations or the like are small.

Further, a resin which is difficult to foam can be formed into a high-quality foamed article. The previously-conducted flow analyses are not required, resulting in easy design and production of a die. Therefore, a die with excellent universal utility can be provided. The same effects as above can be attained by a die configured in such a manner that just a single rotatable body is provided, and whose discharge portion is formed by narrowing the end of the channel with the rotatable body so as to discharge the molten resin by rotation of the rotatable body.

The production method using the foam forming die can easily provide a film-like, sheet-like, orplate-like foam-formed article or a profiled foam-formed article with a uniform thickness or any desired thickness profile, and having a low expansion rate or any desired high expansion rate.

## Claims

1. A foam forming die comprising:
an inlet for inserting a molten resin containing a foaming agent from an extruder,
a hollow portion formed so as to permit the molten resin inserted to spread in the widthwise direction, and
a channel for discharging the molten resin that has passed through the hollow portion and is spread in the widthwise direction, wherein
one end of the channel is narrowed by two rotatable bodies to form a discharge portion, the two rotatable bodies having an outer periphery substantially in the form of a true circle in cross section and being disposed in parallel with their axes extending in the widthwise direction, and
the two rotatable bodies can rotate in the molten resin discharging direction.

2. A foam forming die according to Claim 1, wherein the relationship between the height T of the channel and the smallest gap t between the two rotatable bodies satisfies T>2t, and the relationship between the radius R of at least one rotatable body and the smallest gap t satisfies R≥15t.

3. A foam forming die comprising:
an inlet for inserting a molten resin containing a foaming agent from an extruder,
a hollow portion formed so as to permit the molten resin Inserted to spread in the widthwise direction, and
a channel for discharging the molten resin that has passed through the hollow portion and is spread in the widthwise direction, wherein
one end of the channel is narrowed by a rotatable body to form a discharge portion, the rotatable body having an outer periphery substantially in the form of a true circle in cross section and being disposed with its axis extending in the widthwise direction, and
the rotatable body can rotate in the molten resin discharging direction.

4. A foam forming die according to Claim 3, wherein the relationship between the height T of the channel and the smallest gap t between the inner wall surface of the channel and the outer peripheral surface of the rotatable body satisfies T>2t, and the relationship between the radius R of the rotatable body and the smallest gap t satisfies R≥15t.

5. A foam forming die for forming a plurality of layers comprising:
a plurality of inlets for inserting a molten resin containing a foaming agent from an extruder,
a hollow portion formed so as to permit the molten resin inserted from the respective inlets to spread in the widthwise direction, and
a channel for discharging the molten resin that has joined after passing through the respective hollow portions, and is spread in the widthwise direction, wherein
one end of the channel is narrowed by two rotatable bodies to form a discharge portion, the two rotatable bodies having an outer periphery substantially in the form of a true circle in cross section and being disposed in parallel with axes extending in the widthwise direction, and
the two rotatable bodies can rotate in the molten resin discharging direction.

6. A foam forming die according to any one of Claims 1, 3, and 5 further comprising a rotation adjusting means for increasing or decreasing the speed of rotation or torque of the rotatable body.

7. A foam forming die according to any one of Claims 1, 3, and 5, wherein the rotatable body is provided with projections extending from an outer peripheral surface thereof diametrically outward over the entire width.

8. A foam forming die according to any one of Claims 1, 3, and 5 further comprising a forming device for forming a foam-formed article discharged from the discharge portion into a predetermined shape at the downstream side of the discharge portion.

9. A method of producing a foam-formed article, the method comprising forming a molten resin into a sheet, film or plate-like foam-formed article with the use of a foam forming die according to any one of claims 1, 3, and 5.

10. A method of producing a foam-formed article, the method comprising forming a molten resin into a profiled foam-formed article with the use of a foam forming die according to any one of claims 1, 3, and 5.

11. A method of producing a foam-formed article comprising:
producing a formed article in the form of a solid-solution wherein 5% by weight or more of the foaming agent contained in the article is unevaporated, by cooling a rotatable body using a foam-forming die according to any one of Claims 1, 3, and 5, and
producing a foam-formed article by heating the formed article.
